(19) Europäisches Patentamt
European Patent Office
Office européen des brevets

(11) **EP 4 675 551 A1**

(12) **EUROPEAN PATENT APPLICATION**

(43) Date of publication:
**07.01.2026 Bulletin 2026/02**

(21) Application number: **24221193.6**

(22) Date of filing: **18.12.2024**

(51) International Patent Classification (IPC):
***G06T 5/70*** (2024.01)    ***G06T 5/73*** (2024.01)
***G01N 21/64*** (2006.01)

(52) Cooperative Patent Classification (CPC):
**G06V 10/58; G01N 21/6458; G06T 5/10;
G06T 5/70; G06T 5/73;** G01N 2021/6421;
G01N 2021/6441; G06T 2207/10056;
G06T 2207/10064; G06T 2207/20064;
G06T 2207/30024; G06V 2201/03

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.07.2024 EP 24186888
07.08.2024 EP 24193408**

(71) Applicant: **Leica Microsystems CMS GmbH
35578 Wetzlar (DE)**

(72) Inventors:
• **Hecht, Frank**
  **35578 Wetzlar (DE)**
• **Steinmetz, Irmtraud**
  **35578 Wetzlar (DE)**
• **Straka, Tatjana**
  **35578 Wetzlar (DE)**

(74) Representative: **Paustian & Partner
Patentanwälte mbB
Oberanger 32
80331 München (DE)**

(54) **DEVICE AND METHOD FOR UNMIXING IMAGES**

(57)    A first aspect of the present disclosure is related to a device for unmixing images of samples with fluorescent dyes,
configured to:
- obtain a mixed image of a sample;
- determine an unmixed image based on the mixed image;
- determine a noise-map image based on the mixed image;
- determine a signal-to-noise image based on the unmixed image and the noise map-image ;
- determine a denoised signal-to-noise image based on the signal-to-noise image ;
- determine a noise-reduced unmixed image of the sample based the denoised signal-to-noise image and on a noise-map image .

Fig. 1

EP 4 675 551 A1

# Description

## Technical Field

This disclosure is related to devices for unmixing images of samples comprising fluorescent dyes and methods therefor.

## Background

Fluorescence imaging allows for the use of multiple fluorescent dye markers to label various targets within a sample. However, spectral overlap between dyes (i.e. fluorophores) is common and can complicate image clarity. One method to address this is linear unmixing. Linear unmixing optimizes the signal-to-noise ratio, allowing for clearer differentiation of dyes. However for image regions with stronger spectral overlap and higher noise level, linear unmixing may increase a noise level in pixels with co-localization of the corresponding dyes. Unmixing methods for reduced noise can be applied for images with high noise level. For a larger number of dye components in an image pixel these methods fails to separate all components correctly.

A fluorescence image can be affected by Poisson noise. In Poisson noise the noise level is almost proportional to the square root of the intensity. This "noise law" can be lost after unmixing such that it is no longer possible to estimate the noise from the intensity in the pixels. Loss/deterioration of the noise law limits a usage of linear unmixing in combination with other processing steps like denoising. Denoising with a gaussian filter is not affected due to the liner behavior of the filter. The denoising quality with a gaussian filter is limited.

In case denoising is performed prior to unmixing, the denoiser can work on Poisson noise law. However, even small deviations of the filter behavior in different channels may be amplified by the linear unmixing and leads to visible artefacts. In case, for unmixing is performed prior to denoising, the input image of the denoiser does not follow the noise law anymore. Hence, after denoising there is no known relation between intensity and noise and the denoiser therefor fails to estimate the noise. The noise behavior after linear unmixing can also mislead other processing methods like deconvolution and AI solutions with trained models. Improvements are desired.

## Summary

An object of the present disclosure is to improve an unmixing of images of samples with fluorescent dyes.

This object is solved by the disclosed embodiments, which are defined in particular by the subject matter of the independent claims. The dependent claims provide information for further embodiments. Various aspects and embodiments of these aspects are also disclosed in the summary and description below, which provide additional features and advantages.

A first aspect of the present disclosure is related to a device for unmixing images of samples with fluorescent dyes, *configured to:*

- *obtain a mixed image of a sample;*
- *determine an unmixed image based on the mixed image;*
- *determine a noise-map image based on the mixed image;*
- *determine a signal-to-noise image based on the unmixed image and the noise map-image ;*
- *determine a denoised signal-to-noise image based on the signal-to-noise image ;*
- *determine a noise-reduced unmixed image of the sample based the denoised signal-to-noise image and on a noise-map image .*

In fluorescence image processing, a mixed image may refer to an image where the detected fluorescence signal is a combination of emissions from multiple fluorophores (or dyes) with overlapping emission spectra. This overlap causes the fluorescence signals from different fluorophores to "mix," making it difficult to distinguish or quantify the contribution of each fluorophore in the image. Additionally or alternatively, spectral parts of a mixed image may be caused by autofluorescent characteristics of the sample.

Unmixing is the process of (at least partly) separating overlapping signals and attributing them to their respective fluorophores. This can be achieved using computational techniques based on the known spectral properties of the fluorophores. Unmixing may also be called "spectral unmixing" and is a standard technology, e.g., in multicolor fluorescence microscopy, where multiple fluorophores are used simultaneously to stain a sample from which a microscopic image is to be taken. In particular an unmixing can be based on a pseudoinverse of the mixing matrix, if a number of dyes and a number of detection channels are not the same. In particular, there can be more acquisition channels than dyes. But it can also be the other way around, that there are more dyes than acquisition channels.

A noise-map image (or simply a noise map) is a representation of the noise level or distribution across an image. It highlights where noise is present and may give insight into the intensity and characteristics of noise across different regions of the image. To create a noise map, the noise level at each pixel (or in local patches of the image) can be estimated. The estimation can be based on statistical methods (e.g., calculating local variance) or by comparing the noisy image to a "clean" reference image, if one is available. A noise map can represent the noise as pixel-wise values (each pixel shows the noise level at that point) or in small patches (showing the average noise level over small areas). Higher values in the noise map may correspond to higher levels of noise, often visualized with brighter intensity. In general a noise map image provides a structured way to see how noise affects different areas of an image. A noise-map image can have the same structure as the data on which the noise-map image is based on, i.e. a raw image. A (raw) image may contain pixels in multiple dimensions e.g. x, y, z and time. The data type of a pixel can be different. A pixel of a noise-map image can have floating-point values while the input image may have 8- or 16-bit integer values. A noise-map image may not be intended to be shown to a user.

A signal-to-noise image (or signal-to-noise ratio (SNR) map) is a, in particular visual, representation that shows the ratio of signal strength to noise level across an image. An SNR map may highlight a quality of the image in terms of the clarity of the signal relative to the background noise. A higher SNR indicates clearer, more reliable signal content, while a lower SNR indicates areas where noise may obscure important details.

Based on the signal-to-noise image, a noise reduction may be performed. Such a noise reduction may be based on the assumption that the noise of the signal-to-noise map is distributed according to a Gaussian normal distribution. Or in other words a noise reduction can be selected that works best if the noise is distributed normally. After the signal-to-noise image has been denoised, it needs to be back transformed to the actual image. This is done by using a noise-map image. As a noise-map, the noise-map image determined based on the mixed-image can be used. Alternatively another noise-map image can be used.

Based on embodiments according to the first aspect noise can be efficiently diminished in multi-fluorescent images.

An embodiment of the first aspect is related to a device for unmixing images of samples with fluorescent dyes,
*configured to:*

- *determine a noise-reduced noise-map image ;*

*wherein the noise-map image to determine the noise-reduced image is based on a noise-reduced image .*

A noise-reduced image can be a raw image. Additionally or alternatively, a noise-reduced image can be a noise-map image. This may yield a smoother noise-map image.

A noise reduction for reducing noise resulting in a noise-reduced image may be configured to reduce Poisson noise. Poisson noise, also known as shot noise, may be a type of image noise caused by the random arrival of photons at an imaging sensor. Poisson noise may be prevalent in low-light conditions and/or photon-limited scenarios. In a Poisson distributed process, noise variance can equal the mean, resulting in signal-dependent, non-uniform noise. Brighter regions in an image exhibit higher noise levels due to more photon detections. Poisson noise may appear as grainy fluctuations in image intensity. Techniques like wavelet thresholding and/or Poisson-specific denoising methods may be used to reduce its impact.

An embodiment of the first aspect is related to a device for unmixing images of samples with fluorescent dyes,
*configured to:*

- *determine the noise-reduced noise-map image based on the mixed image .*

Unmixing may change the noise characteristics, e.g., a noise distribution of an image. Basing the noise-map image on an unmixed image may lead to a more realistic noise propagation, i.e. a more realistic noise-map image.

An embodiment of the first aspect is related to a device for unmixing images of samples with fluorescent dyes,
*wherein the denoised signal-to-noise image is further based on the noise-reduced mixed image.*

A noise-reduced mixed image may be a single value that represents a noise characteristics. This can be, e.g. a mean noise level or a standard deviation.

An embodiment of the first aspect is related to a device for unmixing images of samples with fluorescent dyes, *wherein the noise-map image to determine the noise-reduced image is determined parallelly to one or more of the following:*

- *the unmixed image ;*
- *the noise-map image based on the mixed image ;*
- *the signal-to-noise image ;*
- *the denoised signal-to-noise image .*

Parallelizing one or more of these processing steps may lead to a more efficient implementation of a device according to the first aspect.

An embodiment of the first aspect is related to a device for unmixing images of samples with fluorescent dyes, *wherein the denoised mixed image is determined parallelly to one or more of the following:*

- *the unmixed image ;*
- *the noise-map image based on the mixed image ;*
- *the signal-to-noise image .*

Parallelizing one or more of these processing steps may lead to a more efficient implementation of a device according to the first aspect.

An embodiment of the first aspect is related to a device for unmixing images of samples with fluorescent dyes,
*wherein the noise-map image is based on a weighted inverse of the mixed image.*

A weighted inverse of the mixed image can be quadratic inverse of the mixing matrix, for example.

An embodiment of the first aspect is related to a device for unmixing images of samples with fluorescent dyes,
*configured to:*

- *determine a noise-correct image based on:*
- *the unmixed image ,*
- *the noise-reduced unmixed image , and*
- *the noise map image .*

By using all three types of information, the Poisson characteristic of image noise of the raw image may be preserved and may facilitate further processing.

An embodiment of the first aspect is related to a device for unmixing images of samples with fluorescent dyes,
*configured to:*

- *determining a noise estimation based on the mixed image;*
- *determining the noise-correct image based on the noise estimation.*

This may further help to preserve the Poisson characteristics of the noise prevalent in the original raw image.

An embodiment of the first aspect is related to a device for unmixing images of samples with fluorescent dyes,
*wherein for determining the noise-correct image based on the unmixed image and the noise-reduced unmixed image the unmixed image is weighted by a mixing factor not less than 20% and the noise-reduced unmixed image is weighted by not more than 80%.*

The mixing factor is limited to reduce not below 20% noise level which has been found to be sufficient for all tested denoisers and deconvolution routines. Some denoisers may be confused when the data contain fractions of a photon count. When the input image has been recorded in photon counting mode this problem cannot happen when the output data depth is the same as the input and there is no scaling for the unmixing matrix. For other images a final discretization step can be applied.

An embodiment of the first aspect is related to a device for unmixing images of samples with fluorescent dyes,
*wherein the denoised signal-to-noise image is determined based on a Wavelet-filter.*

The denoiser may be a Dual Tree-Complex Wavelet Filter (DTCWF) with LeGall 5, 3 tap filters for the first level and Kingsbury quarter sample shift orthogonal (Q-Shift) 32, 32 tap filters for higher levels. The wavelet shrinking follows the procedure of Sendur and Selesnick with minor modifications (L. Sendur & I. Selesnick. "Bivariate shrinkage with local variance estimation," IEEE Signal Process. Lett., 9, 438 - 441 (2003)).

A second aspect of the present disclosure is related to a method for unmixing images of samples with fluorescent dyes,

*comprising the steps:*

- *obtaining a mixed image of a sample;*
- *determining an unmixed image based on the mixed image;*
- *determining a noise-map image based on the mixed image;*
- *determining a signal-to-noise-image based on the unmixed image and the noise map-image ;*
- *determining a denoised signal-to-noise image based on the signal-to-noise image ;*
- *determining a noise-reduced unmixed image of the sample based the denoised signal-to-noise image and on a noise-map image .*

Further steps and/or parameters can be based on functionalities described in relation to the first aspect and its embodiments.

A third aspect of the present disclosure is related to a computer program *for performing the method according to the preceding aspect when the computer program is run on a processor.*

The computer program can also be configured to be executed on a device according to the first aspect of the present disclosure.

A further aspect of the present disclosure is related to a computing device comprising a processor configured to carry out the method according to any one of preceding aspects/embodiments.

A further process of the present disclosure is related to a computer program product comprising instructions which, when the program is executed by a computer system, cause the computer system to carry out the method according to any one of the preceding aspects/embodiments.

A further aspect of the present disclosure is related to a computer-readable medium comprising instructions which, when executed by a computer system, cause the computer system to carry out the method according to any one of the preceding aspects/embodiments.

**Brief description of the figures**

Further advantages and features result from the following embodiments, some of which refer to the figures. The figures do not always show the embodiments to scale. The dimensions of the various features may be enlarged or reduced, in particular for clarity of description. For this purpose the figures are at least partially schematized.

Fig. 1 illustrates a block diagram for unmixing and denoising an image according to an embodiment of this disclosure.

Fig. 2 illustrates a block diagram for unmixing and denoising an image according to an embodiment of

Fig. 3 illustrates a unmixing/denoising results of an embodiment according to this disclosure.

Fig. 4 illustrates a unmixing/denoising results of embodiments according to this disclosure.

Fig. 5 shows a system to be used in connection with a device and/or method according to embodiments of this disclosure.

Although some aspects have been described in the context of an apparatus (or a system) in the present disclosure, the description of these aspects also represents a description of the corresponding method, where a block or device corresponds to a method step or a feature of a method step.

Analogously, aspects described in the context of a method step also represent a description of a corresponding block, item, or feature of a corresponding apparatus or of a system that may in particular be distributed over different locations and is configured to exchange information between the different locations with respective communication means.

In general, a disclosure of a described method also applies to a corresponding device (or apparatus) for carrying out the method or a corresponding system comprising one or more devices and vice versa. For example, if a specific method step is described, a corresponding device may include a feature to perform the described method step, even if that feature is not explicitly described or represented in the figure. On the other hand, if, for example, a specific device is described on the basis of functional units, a corresponding method may include one or more steps to perform the described functionality, even if such steps are not explicitly described or represented in the figures.

Similarly, a system can be provided with corresponding device features or with features to perform a particular method step. The features of the various exemplary aspects and embodiments described above or below may be combined unless expressly stated otherwise.

As used herein the term "and/or" includes any and all combinations of one or more of the associated listed items and may be abbreviated as "/". Expressions as, "for example", "e.g.", or "in particular" denote facultative or optional features that can be combined with all other (mandatory, facultative, or optional) features of the aspects or embodiments of this disclosure, until explicitly stated otherwise.

In the following description reference is made to the accompanying figures which form part of the disclosure, and which illustrate specific aspects in which the present disclosure can be understood. Identical reference signs refer to identical or at least functionally or structurally similar features.

**Detailed description**

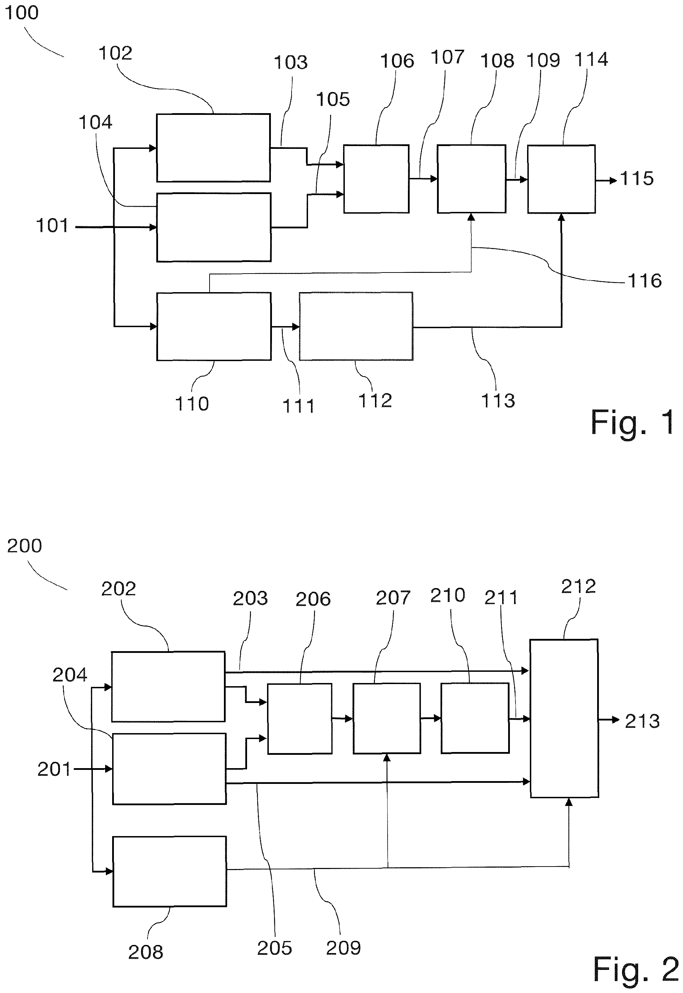

Fig. 1 shows a flow chart 100 for processing a noise reduced unmixed image.

In a first step, an initial image 101 is loaded. The initial image A can be a raw image obtained by a microscope, a laparoscope or any other camera capturing an image from a stained sample. The initial image 101 comprises signals from multiplied dyes of a stained sample or from autofluorescent material of the sample. The initial image 101 is unmixed, in particular with respect to a plurality of dyes and a plurality of detection channels, by using a pseudoinverse (U) 102 to obtain an unmixed image 103.

Independent of the unmixing 102, the initial image is also processed with a noise model 104 in order to receive a first noise-map image 105 of the initial image 101. The first noise-map image (E) 105 can be based on the pseudoinverse U as well, such that a noise-map value is determined for dye d at pixel p and for the recording channel c, e.g., as follows:

$$E_{d,p} = \sqrt{\sum_c U_{d,c}{}^2 A_{c,p}}$$

The signal to noise image 107 is determined by a noise processing function 106, such that, e.g.:

$$G_{d,p} = \begin{cases} 0, & for\ E_{d,p} = 0 \\ \dfrac{C_{d,p}}{E_{d,p}}, & for\ E_{d,p} > 0 \end{cases}$$

Afterwards, the signal-to-noise image 107 is denoised by the denoising function 108 assuming Gaussian noise. This results in a denoised SNR-map 109.

Independent of the determination of unmixed image 103 and of the determination of the first noise-map image 105, the raw image 101 can be additionally used to determine a second noise-map image 113. In order to determine the second noise-map image 113, the initial image 101 is denoised by a denoising function 110. This can be a denoising which assumes a Poisson statistics of the noise within the initial image, or which works - at least - best for a Poisson-distributed noise. The denoised mixed image 111 is used to estimate the noise propagation 113 based on a second noise model 112. Basing the noise map 113 on the denoised, but mixed initial image may result in a smoother noise-map image 113.

The denoising function 108 works based on the estimated noise level 116 from the denoising 110 of the mixed image 101. The square root of P can be used as noise level for the denoising 108.

The final, denoised image 115 is determined by back transforming I of the denoised SNR-map 109 and based on the second noise-map image (M) 113, e.g., such that:

$$O_{d,p} = I_{d,p} M_{d,p}$$

The denoiser 110 may not cause the initial mentioned artefacts on the noise map 113 since the noise propagation may not subtract, it adds. The noise estimate 116 is preferred in the denoiser 108 since it is more stable than the estimate 107.

In particular, a neuronal network denoiser similar mechanism can be implemented where the noise estimate 116 is not a single value but a vector of values, e.g. of about 256 floating point values, containing information of noise level and spatial structure.

Using the smooth second noise map 113 rather than the first noise-map image 105 for the back transformation 114 of the denoised SNR map ensures that no additional noise is introduced in this step.

Fig. 2 shows a flow chart 200 for processing a noise-reduced unmixed image.

An initial image 201 with multiple fluorescence signals is unmixed by applying the pseudoinverse 202 resulting in an unmixed image 203.

Independently, the mixed image 201 is inputted into noise model 204 to obtain a noise map image 205.

The unmixed image 203 and the noise-map image 205 are then converted to an SNR map in block 206. The SNR map is denoised by the denoiser 207 and back transformed to a denoised unmixed image 211 by function 210. The denoiser 207 uses a noise estimate 209 from the initial image 201 calculated in the noise estimator 208.

The mixer 212 combines the noisy unmixed image (C) 203, the denoised image (K) 211, the noise map image (E) 205 and the estimated noise level (I) 209 to generate the desired image 213. In particular this can be done by the following processing:

$$r = \sqrt{\left(\left(K_{d,p} + 0.02 \cdot I\right) / \left(E_{d,p} + 0.02 \cdot I\right)\right)_+}$$

$$f = \begin{cases} 0.2, & r \le 0.2 \\ r, & 0.2 < r \le 1.0 \\ 1, & r > 1.0 \end{cases}$$

$$M_{d,p} = C_{d,p} \cdot f + K_{d,p} \cdot (1 - f)$$

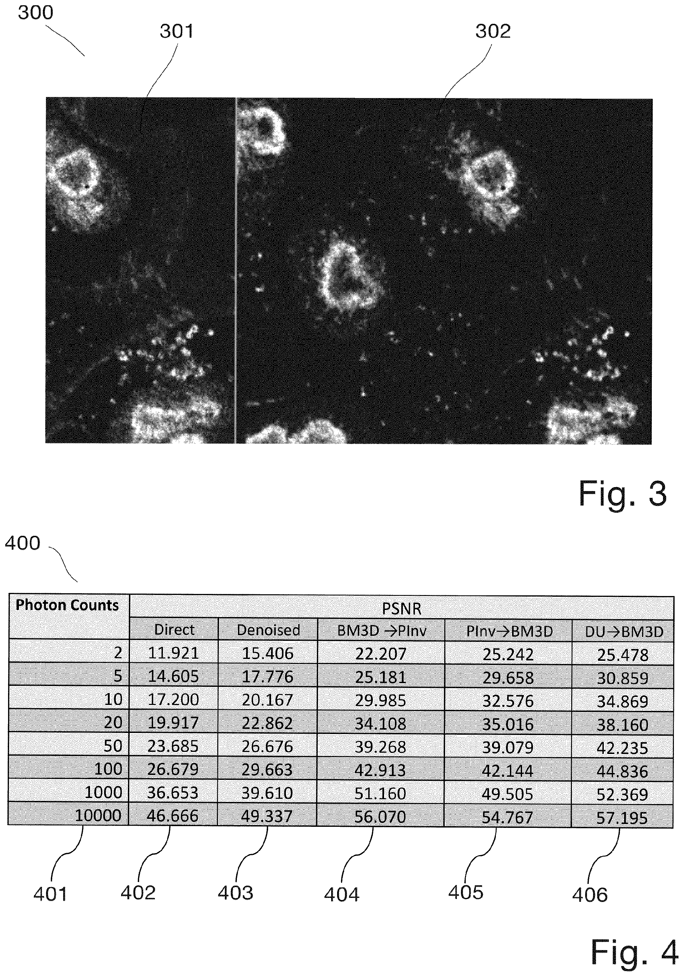

Here, the mixing factor f can be limited to reduce not below 20% noise level which has been found to be sufficient for all tested denoisers and deconvolution routines. Some denoisers may be confused when the data contain fractions of a photon count. When the input image has been recorded in photon counting mode this problem cannot happen when the output data depth is the same as the input and there is no scaling for the unmixing matrix. For other images a final discretization step can be applied. In the disclosed result in Fig. 3, a discretization step was used that rounds to integer photon counts.

In a preferred embodiment a denoiser according to L. Sendur & I. Selesnick "Bivariate shrinkage with local variance estimation," IEEE Signal Process.; Lett., 9, 438 - 441 (2003) may be used in the denoising block 207. This denoiser achieves sufficient quality and high processing speed.

Fig. 3 shows results 300 of a denoised unmixing according to the method of Fig. 2 of this disclosure in comparison to a prior art implementation. Thereby, the denoiser 207 for the SNR map was implemented according to L. Sendur & I. Selesnick "Bivariate shrinkage with local variance estimation," IEEE Signal Process.; Lett., 9, 438 - 441 (2003).

An unmixed image 301 with conventional linear unmixing is shown on the left side. An unmixed image 302 with unmixing according to the method of the second embodiment is shown on the right side. As can be seen, regions with high crosstalk in the raw image show higher noise in image 301 relative to image 302.

The results in Fig. 3 and Fig. 4 were obtained with method and the L. Sendur & I. Selesnick filter in denoising block 207.

Fig. 4 shows a table with comparison of unmixed images with a ground truth confocal image in dB PSNR (peak signal-to-noise ratio). A typical mixing matrix has been applied to the ground truth image. Then the image was unmixed with different methods and the result was compared to the ground truth image. The table shows the comparison results for different levels of noise 401. Column 402 contains the results for prior-art linear unmixing. column 403 contains results with unmixing with the second embodiment. Note that the image for column 403 is still noisy since the goal of the method is to preserve the noise law and not to denoise.

Column 404 shows the comparison results for denoising with a BM3D denoising filter according Dabov at first and then performing a prior-art unmixing (K. Dabov, A. Foi, V. Katkovnik, and K. Egiazarian; "Image denoising by sparse 3d transformdomain collaborative filtering"; IEEE Transactions on image processing; 16(82):3736-3745 (2007)). Column 405 shows the comparison results for first prior-art unmixing and then BM3D denoising. column 405 shows the comparison results for unmixing with the second embodiment and then BM3D denoising. For the typical photon count level in a confocal image between 10 and 50 photon counts the method of the second embodiment improved the denoising quality by about 3dB. Column 406 show results for a method according to an embodiment of this disclosure, wherein a denoised unmixing in a first step is followed by a BM3D denoiser in a second step. During the first step a noisy image with Poisson noise law is produced. During the second step the image is denoised.

A further embodiment is related to a method for unmixing fluorescence microscopy images with the following steps. A linear unmixing of a raw image 101 is performed resulting in an unmixed image 103. Further, a calculation of a noise-map image 105 of the unmixed image 103 from the raw image is performed. A calculation of a signal-to-noise image 107 from the unmixed image 103 and the noise-map image 105 is also performed. And a calculation of a denoised signal-to-noise image 109 from the signal-to-noise image 107 and a back transformation of the denoised signal-to-noise image 109 using a noise-map image is performed as well.

The noise-map image for the back transformation can be a denoised noise-map image 113. The noise estimate used by the denoiser 108 can be estimated form a raw image 101 rather than from the signal-to-noise image 107. The noisy unmixed image 107, the denoised unmixed 211 and a noise-map image can be mixed to produce a resulting image 213. The mixer 212 may therefore use a noise estimate from a raw image (and not from an unmixed image).

Some embodiments relate to a microscope comprising a system as described in connection with one or more of the Figs. 1 to 4. Alternatively, a microscope may be part of or connected to a system as described in connection with one or more of the Figs. 1 to 4.

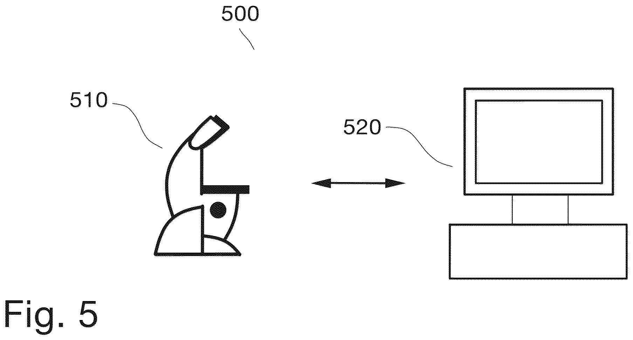

Fig. 5 shows a schematic illustration of a system 500 configured to perform a method described herein. The system 500 comprises a microscope 510 and a computer system 520. The microscope 510 is configured to take images and is connected to the computer system 520. The computer system 520 is configured to execute at least a part of a method described herein. The computer system 520 may be configured to execute a machine learning algorithm. The computer system 520 and microscope 510 may be separate entities but can also be integrated together in one common housing. The computer system 520 may be part of a central processing system of the microscope 510 and/or the computer system 520 may be part of a subcomponent of the microscope 510, such as a sensor, an actor, a camera or an illumination unit, etc. of the microscope 510.

The computer system 520 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 520 may comprise any circuit or combination of circuits. In one embodiment, the computer system 520 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 520 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 520 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 520 may also include a display device, one or more speakers, and a keyboard and/or controller, which can include a mouse, trackball, touch screen, voice-recognition device, or any other device that permits a system user to input information into and receive information from the computer system 520.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

List of reference signs

100 flow chart image processing

| 101 | image with multiple fluorescence signals |
|-----|------------------------------------------|
| 102 | pseudoinverse |
| 103 | unmixed image |
| 104 | noise model |
| 105 | first noise map image |
| 106 | noise processing |
| 107 | SNR map |
| 108 | denoiser |
| 109 | denoised SNR map |
| 110 | denoiser |
| 111 | denoised mixed image |
| 112 | noise model |
| 113 | denoised noise map |
| 114 | back transformation to image |
| 115 | denoised unmixed image |
| 116 | noise estimate |
| 200 | flow chart image processing |
| 201 | image with multiple fluorescence signals |
| 202 | pseudoinverse |
| 203 | unmixed image |
| 204 | noise model |
| 205 | noise map image |
| 206 | noise processing |
| 207 | denoiser |
| 208 | noise model |
| 209 | denoised noise map image |
| 210 | back transformation to image |
| 211 | denoised unmixed image |
| 212 | mixer |
| 213 | denoised noise corrected unmixed image |
| 300 | implementation results |
| 301 | unmixed image |
| 302 | unmixed image |
| 401 | noise level |
| 402 | PSNR for common unmixing |
| 403 | PSNR for denoised unmixing |
| 404 | PSNR for BM3D denoising filter |
| 405 | PSNR for mixed denoising |
| 406 | PSNR for denoised unmixing |
| 500 | system |
| 510 | microscope |
| 520 | computer system |

**Claims**

1. A device for unmixing images of samples with fluorescent dyes,
   configured to:

   - obtain a mixed image (101) of a sample;
   - determine an unmixed image (103) based on the mixed image;
   - determine a noise-map image (105) based on the mixed image;
   - determine a signal-to-noise image (107) based on the unmixed image (103) and the noise map-image (105);
   - determine a denoised signal-to-noise image (109) based on the signal-to-noise image (107);
- determine a noise-reduced unmixed image (115) of the sample based the denoised signal-to-noise image (109) and on a noise-map image (105, 113).

2. The device according to the preceding claim, configured to:

   - determine a noise-reduced noise-map image (113);

   wherein the noise-map image to determine the noise-reduced image (115) is based on a noise-reduced image (111).

3. The device according to the preceding claim, configured to:

   - determine the noise-reduced noise-map image (113) based on the mixed image (101).

4. The device according to one of the preceding claims, configured to:

   - determine a noise-reduced mixed image (116) based on the mixed image (103);

   wherein the denoised signal-to-noise image (109) is further based on the noise-reduced mixed image (116).

5. The device according to one of the preceding claims, wherein the noise-map image (113) to determine the noise-reduced image (115) is determined parallelly to one or more of the following:

   - the unmixed image (103);
   - the noise-map image (105) based on the mixed image (101);
   - the signal-to-noise image (107);
   - the denoised signal-to-noise image (109).

6. The device according to one of the preceding claims, wherein the denoised mixed image (116) is determined parallelly to one or more of the following:

   - the unmixed image (103);
   - the noise-map image (105) based on the mixed image (101);
   - the signal-to-noise image (107).

7. The device according to one of the preceding claims, wherein the noise-map image (105, 113) is based on a weighted inverse of the mixed image.

8. The device according to one of the preceding claims, configured to:

   - determine a noise-correct image (213) based on:

      -- the unmixed image (203),
      -- the noise-reduced unmixed image (211), and
      -- the noise map image (205).

9. The device according to the preceding claim, configured to:

   - determining a noise estimation (209) based on the mixed image;
   - determining the noise-correct image (213) based on the noise estimation.

10. The device according to the preceding claim, wherein for determining the noise-correct image (213) based on the unmixed image (203) and the noise-reduced unmixed image (211) the unmixed image (203) is weighted by a mixing factor not less than 20% and the noise-reduced unmixed image (211) is weighted by not more than 80%.

11. The device according to one of the preceding claims, wherein the denoised signal-to-noise image (109) is determined based on a Wavelet-filter.

12. A method for unmixing images of samples with fluorescent dyes, comprising the steps:

   - obtaining a mixed image (101) of a sample;
   - determining an unmixed image (103) based on the mixed image;
   - determining a noise-map image (105) based on the mixed image;
   - determining a signal-to-noise-image (107) based on the unmixed image (103) and the noise map-image (105);
   - determining a denoised signal-to-noise image (109) based on the signal-to-noise image (107);
   - determining a noise-reduced unmixed image (115) of the sample based the denoised signal-to-noise image (109) and on a noise-map image (105, 113).

13. A computer program with a program code for performing the method according to the preceding claim when the computer program is run on a processor.

Fig. 1

Fig. 2

Fig. 3

| Photon Counts | PSNR | | | | |
|---|---|---|---|---|---|
| | Direct | Denoised | BM3D →PInv | PInv→BM3D | DU→BM3D |
| 2 | 11.921 | 15.406 | 22.207 | 25.242 | 25.478 |
| 5 | 14.605 | 17.776 | 25.181 | 29.658 | 30.859 |
| 10 | 17.200 | 20.167 | 29.985 | 32.576 | 34.869 |
| 20 | 19.917 | 22.862 | 34.108 | 35.016 | 38.160 |
| 50 | 23.685 | 26.676 | 39.268 | 39.079 | 42.235 |
| 100 | 26.679 | 29.663 | 42.913 | 42.144 | 44.836 |
| 1000 | 36.653 | 39.610 | 51.160 | 49.505 | 52.369 |
| 10000 | 46.666 | 49.337 | 56.070 | 54.767 | 57.195 |

Fig. 4

500

510

520

Fig. 5

<table>
<tr><td>Europäisches<br>Patentamt<br>European<br>Patent Office<br>Office européen<br>des brevets</td><td style="text-align:center"><b>EUROPEAN SEARCH REPORT</b></td><td><b>Application Number</b><br><br>EP 24 22 1193</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | INCE TANER ET AL: "Simultaneous Nonconvex Denoising and Unmixing for Hyperspectral Imaging", IEEE ACCESS, vol. 7, 30 October 2019 (2019-10-30), pages 124426-124440, XP011745221, DOI: 10.1109/ACCESS.2019.2938633 [retrieved on 2019-09-11] * abstract * * section I, first paragraph * * section II * * figures 1, 2 * | 1-13 | INV.<br>G06T5/70<br>G06T5/73<br>G01N21/64 |
| A | FAVREAU PETER F ET AL: "Excitation-scanning hyperspectral imaging microscope", JOURNAL OF BIOMEDICAL OPTICS, SPIE, 1000 20TH ST. BELLINGHAM WA 98225-6705 USA, vol. 19, no. 4, 1 April 2014 (2014-04-01), page 46010, XP060047383, ISSN: 1083-3668, DOI: 10.1117/1.JBO.19.4.046010 [retrieved on 2014-04-11] * abstract * * sections 2.5, 2.6 * | 1-13 | TECHNICAL FIELDS SEARCHED (IPC)<br><br>G06T<br>G01N |

The present search report has been drawn up for all claims

| Place of search | Date of completion of the search | Examiner |
|---|---|---|
| Munich | 13 May 2025 | Engels, Angela |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **L. SENDUR** ; **I. SELESNICK**. Bivariate shrinkage with local variance estimation. *IEEE Signal Process. Lett*, 2003, vol. 9, 438-441
- Bivariate shrinkage with local variance estimation. **L. SENDUR** ; **I. SELESNICK**. IEEE Signal Process.; Lett. 2003, vol. 9, 438-441
- **L. SENDUR** ; **I. SELESNICK**. Bivariate shrinkage with local variance estimation. *IEEE Signal Process.; Lett.*, 2003, vol. 9, 438-441
- **K. DABOV** ; **A. FOI** ; **V. KATKOVNIK** ; **K. EGIAZARIAN**. Image denoising by sparse 3d transformdomain collaborative filtering. *IEEE Transactions on image processing*, 2007, vol. 16 (82), 3736-3745